# EUROPÄISCHE PATENTSCHRIFT

(11) **EP 1 314 706 B1**
(45) Veröffentlichungstag und Bekanntmachung des Hinweises auf die Patenterteilung: **18.07.2007**
(21) Anmeldenummer: 02017886.9
(22) Anmeldetag: 09.08.2002
(51) Int. Cl.: C04B 28/02, C04B 14/14

(54) **Hydraulisches Bindemittel**
Hydraulic binder
Liant hydraulique

(30) Priorität: 21.11.2001 DE 10157129
(43) Veröffentlichungstag der Anmeldung: 28.05.2003
(73) Patentinhaber: Kehrmann, Alexander, 46509 Xanten (DE)
(72) Erfinder: Kehrmann, Alexander, 47053 Duisburg (DE)
(74) Vertreter: Renken, Joachim

(56) Entgegenhaltungen:
- WO-A-00/06517
- WO-A-84/01942
- WO-A-96/33133
- DE-A- 10 014 468
- US-A- 5 362 321

## Beschreibung

Die Erfindung betrifft ein hydraulisches Bindemittel mit dem Hauptbestandteil Zement, dem eine Mischung aus feuchtem Grünsalz (Eisen(II)sulfat) und inertem Trägermaterial zugefügt ist.

Zement kommt in der Baustoffindustrie als feingemahlenes hydraulisches Bindemittel zur Herstellung von Betonmörtel, Betonsteinen und Fertigteilen zur Anwendung. Hierbei wird der Zement oft in Handarbeit verarbeitet. Dies ist insofern nachteilig, weil die üblichen Zemente aufgrund ihres Chromatgehalts als Allergieauslöser für Hautekzeme, der sogenannten Maurerkrätze, gelten.

Chromathaltiger Zement enthält bis zu 100 ppm Chrom(VI)-Verbindungen (Chromate), von denen etwa 20 % löslich sind. Das lösliche Chromat ist die Ursache der allergischen Zementekzeme. Durch Einsatz chromatarmer Zemente und chromatarmer zementhaltiger Zubereitungen, beispielsweise Fliesenkleber oder Trockenmörtel, können diese Erkrankungen weitgehend eliminiert werden. Aus diesem Grund sollen zementhaltige Baustoffe, die von Hand verarbeitet werden, ausschließlich chromatarm hergestellt werden. Chromatarme Zemente enthalten weniger als 2 ppm wasserlösliches Chrom(VI) bezogen auf die Trockenmasse.

In diesem Zusammenhang ist es bekannt, den Chromatgehalt im Zement durch Zugabe eines Reduktionsmittels, nämlich Eisen(II)sulfat zu reduzieren. Hierzu wird dem Zement gemäß der DE 197 44 035 A1 trockenes granulatförmiges Eisen(II)sulfat in einer Menge von 0,01 bis 1 Gew.-% bei der Entnahme des Zements aus einem Großsilo zugegeben. Beim Anmachen der Mörtel- oder Betonmischung löst sich das granulatförmige Eisen(II)sulfat im Anmachwasser auf und kommt beim Vermischen mit dem Chromat(VI) in Kontakt, wodurch dieses chemisch reduziert wird.

Auch in Manns, W.; Laskowski, Ch.: Eisen(II)sulfat als Zusatz zur Chromatreduzierung in BE-Z: Beton, H. 2/1999, S. 78-85 wird die Verwendung von trockenem pulverförmigem Eisen(II)sulfat zur Chromatreduzierung beschrieben.

Trockenes Eisen(II)sulfat verliert jedoch durch Oxidation mit Luftsauerstoff an Wirksamkeit. Aus diesem Grund wird das Eisen(II)sulfat dem Zement bei den bekannten Vorschlägen auch erst bei der Entnahme aus dem Großsilo zugegeben, um so die Gefahr einer unerwünschten Reaktion des zugemischten granulatförmigen Eisen(II)sulfats mit dem Zement zu verringern

Durch die US-A-5 362 321 zählt eine Zementzusammensetzung zum Stand der Technik, dem zur Reduzierung von Chromatverbindungen Mangan(II)sulfat zugegeben wird, wobei das Mangan(II)sulfat eine mittlere Teilchengröße von weniger als 0,05 mm besitzt und mit dem Zement vermahlen wird.

Im Umfang der DE 100 14 468 A1 ist es bekannt, bei der Herstellung eines Baustoffes aus Zement, Wasser und Zuschlagstoffen beim Anmischvorgang feuchtes Eisen(II)sulfat, sogenanntes Grünsalz, zuzufügen. Das feuchte Grünsalz besitzt die gleichen Reduktionseigenschaften bezüglich der Chrom(VI)-Verbindungen wie trockenes Eisen(II)sulfat in Granulatform, ist jedoch wesentlich kostengünstiger. Um das Handling des feuchten Grünsalzes zu verbessern, wird diesem ein inertes Trägermaterial, z.B. gemahlener Kalkstein, zugegeben. Die Chromatreduzierung mittels feuchtem Grünsalz erfüllt die gesetzlichen Anforderungen absolut. Dieses Material wird zur Zeit bereits in vielen Zementwerken ohne Probleme eingesetzt. Mitunter kann es jedoch zu Problemen bei der Dosierung kommen. Auch kann sich das inerte Trägermaterial aufgrund seiner Korngröße teilweise nachteilig auf die Verarbeitung des hergestellten Baustoffs auswirken.

Der Erfindung liegt daher ausgehend vom Stand der Technik die Aufgabe zugrunde, ein sowohl herstellungs- als auch anwendungstechnisch verbessertes chromatarmes hydraulisches Bindemittel zu schaffen.

Zwei selbstständige Lösungen dieser Aufgabe zeigt die Erfindung in den Patentansprüchen 1 und 2 auf.

Das hydraulische Bindemittel besteht aus Zement, dem eine Mischung aus feuchtem Grünsalz (Eisen(II)sulfat) mit inertem Trägermaterial zugefügt ist, wobei diese Mischung eine Körnung aufweist, deren Siebrückstand auf einem 0,2 mm Sieb kleiner oder gleich 30 % ist.

Die Körnung der Mischung ist so fein, dass diese mit unterschiedlichsten Dosieraggregaten präzise und in exakt vorbestimmbaren Mengen dosiert werden kann. Auch bei der Verarbeitung, wie beispielsweise bei Verputzarbeiten, mit einem Baustoff unter Verwendung des erfindungsgemäß vorgesehenen Bindemittels erhält man einen sehr feinen, sehr gut verarbeitenden Baustoff. Nachteilige Auswirkungen aus zu groben Körnern sind unterbunden.

Gemäß Patentanspruch 1 kommt als Trockenmittel ein Silicagel zur Anwendung.

Bei Silicagel, auch Kieselgel genannt, handelt es sich um eine feste amorphe Kieselsäure. Dieses ist als Adsorptionsmittel für Gase, Dämpfe und Flüssigkeiten bekannt. Es lässt sich mit verschiedenen Porendurchmessern herstellen. Silicagele absorbieren Feuchtigkeit auf ihrer großen inneren Oberfläche, die bis zu 800 m²/g betragen kann.

Silicagel wird synthetisch hergestellt als Kondensationsprodukt von Siliciumdioxid.

Hierzu kann Natriumsilicat mit einer Mineralsäure, beispielsweise Schwefelsäure, gemischt werden. Aus diesen beiden Stoffen wird ein Sol (SiO₂, Na₂SO₄, H₂O) erzeugt, welches zu Gallerte erstarrt. Aus den zerkleinerten Gallertestücken wird das entstandene Natriumsulfat ausgewaschen. Die unterschiedlichen Eigenschaften wie Porenvolumen, Porendurchmesser und innere Oberfläche erreicht man durch Führung des Waschvorgangs mit unterschiedlichen pH-Werten, Temperaturen und anderen Parametern. Das gewaschene Produkt heißt Hydrogel. Nach dem Trocknen entsteht daraus Silicagel als ungleichförmiges Granulat.

Es hat sich herausgestellt, dass Silicagel besonders vorteilhaft für den Einsatz als Trägermaterial in der erfindungsgemäß vorgesehenen Mischung mit Grünsalz ist.

Neben dem Hauptbestandteil Silicat (SiO₂) enthält das Silicagel noch Aluminium (Al₂O₃), Natrium (Na₂O), Sulfat (SO₄²⁻) sowie Eisen (Fe₂O₃), Kalium (K₂O), Lanthan (La₂O₃), Ammonium (NH₄⁺), Chlorid (Cl⁻) und Cer (Ce₂O₃). Auch Calcium (Ca) und Magnesium (Mg) kann enthalten sein.

Auch Tonerde, insbesondere aktivierte Tonerde, kann als Trägermaterial zum Einsatz gelangen, wie dies Patentanspruch 2 vorsieht. Aktivierte Tonerde ist aktiviertes Aluminiumoxid (Al₂O₃). Es handelt sich um ein natürliches Tonmineral (Bentonit) in bröseliger Form mit ähnlichen Adsorptionseigenschaften für Feuchtigkeit wie Silicagel.

Das inerte Trägermaterial innerhalb der Mischung hat die Funktion eines Trockenmittels und Feuchtigkeitspuffers. Durch die Mischung des feuchten Grünsalz mit dem Trägermaterial erhält diese Mischung die für den Einsatz im Zement notwendigen Eigenschaften. Die Trocknungs- und Pufferwirkung des Trägermaterials gewährleistet eine optimale Einstellung des Grünsalzes. Die Oxidation mit Luftsauerstoff wird vermieden ebenso wie ein Verklumpen. Die Mischung kann dem Zement zugegeben und mit diesem vermengt werden, ohne dass es zu einem Verklumpen kommt. Erst beim Anmachen einer Mörtel- oder Betonmischunglöst sich das Eisen(II)sulfat im Anmachwasser auf. Es gelangt dann mit dem Chromat(VI) in Kontakt und reduziert dieses chemisch.

Die Klassierung der Mischung auf die gewünschte Korngröße bzw. Feinheit erfolgt vorzugsweise in mechanischen Bearbeitungsvorrichtungen, vorzugsweise Mühlen, wie Kugelmühlen. Das so mit verhältnismäßig geringfügigem Aufwand aufbereitete Material kann dann problemlos dem Zement zugefügt werden.

Vorzugsweise soll der Siebrückstand der Mischung auf einem 0,2 mm Sieb kleiner oder gleich 20 % sein, wie dies Patentanspruch 3 vorsieht. Die feinkörnige Mischung ist noch besser zu dosieren und besser in der Verarbeitung.

Zur Einstellung der mechanischen Eigenschaften des unter Verwendung des erfindungsgemäß vorgesehenen hydraulischen Bindemittels hergestellten Baustoffes, beispielsweise des Festigkeits- oder Fließfähigkeitsverhaltens, kann die Mischung aus Grünsalz und inertem Trägermaterial noch Zuschlagstoffe enthalten, nämlich gemäß Patentanspruch 4 Zink, Aluminium, Phosphor oder Titanoxid.

Nach Patentanspruch 5 wird die Mischung aus Grünsalz und Trägermaterial in einer Menge zwischen 0,01 Gew.-% bis 5 Gew.-% bezogen auf die Zementmenge zugefügt. Hierdurch kann eine wirksame Reduktion des Chromatgehalts bis unterhalb der als gesundheitsbedenklich angesehenen Grenzen bewirkt werden.

Vorzugsweise liegt der Anteil an inertem Trägermaterial zwischen 5 % und 15 %, insbesondere bei ca. 10 %, bezogen auf die Menge des Grünsalzes, wie dies Patentanspruch 6 vorsieht.

Zink beispielsweise dient als Festigkeitsförderer und kommt in einer Menge von < 10 Gew.-% zum Einsatz. Phosphor hat eine verzögernde Wirkung auf die Erstarrungszeit des Zements. Auch Phosphor wird in der Regel in Mengen < 10 % eingesetzt.

## Patentansprüche

1. Hydraulisches Bindemittel mit dem Hauptbestandteil Zement, dem eine Mischung aus feuchtem Grünsalz (Eisen(II)sulfat) und inertem Trägermaterial zugefügt ist, **dadurch gekennzeichnet, dass** das Trägermaterial ein Silicagel ist und die Mischung eine Körnung mit einem Siebrückstand auf einem 0,2 mm Sieb von kleiner oder gleich 30 % aufweist.

2. Hydraulisches Bindemittel mit dem Hauptbestandteil Zement, dem eine Mischung aus feuchtem Grünsalz (Eisen(II)sulfat) und inertem Trägermaterial zugefügt ist, **dadurch gekennzeichnet, dass** das Trägermaterial aktivierte Tonerde ist und die Mischung eine Körnung mit einem Siebrückstand auf einem 0,2 mm Sieb von kleiner oder gleich 30 % aufweist.

3. Hydraulisches Bindemittel nach Anspruch 1 oder 2, **dadurch gekennzeichnet, dass** der Siebrückstand kleiner oder gleich 20 % ist.

4. Hydraulisches Bindemittel nach einem der Ansprüche 1 bis 3, **dadurch gekennzeichnet, dass** die Mischung zumindest einen der Zuschlagstoffe Zink (Zn), Aluminium (Al), Phosphor (P) oder Titanoxid (TiO₂) enthält.

## Claims

1. Hydraulic binder with the main constituent cement, to which a mixture of moist green salt (iron(II) sulphate) and inert carrier material is added, **characterised in that** the carrier material is a silica gel and the mixture has a screen size with a sieve residue on a 0.2 mm sieve of less than or equal to 30%.

2. Hydraulic binder with the main constituent cement, to which a mixture of moist green salt (iron(II) sulphate) and inert carrier material is added, **characterised in that** the carrier material is activated alumina and the mixture has a screen size with a sieve residue on a 0.2 mm sieve of less than or equal to 30%.

3. Hydraulic binder according to claim 1 or 2, **characterised in that** the sieve residue is less than or equal to 20%.

4. Hydraulic binder according to one of claims 1 to 3, **characterised in that** the mixture contains at least one of the additives zinc (Zn), aluminium (Al), phosphorus (P) or titanium oxide (TiO₂).

## Revendications

1. Liant hydraulique avec le ciment comme composant principal, auquel est ajouté un mélange de vitriol vert (sulfate ferreux) humide et d'un matériau support inerte, **caractérisé en ce que** le matériau support est un gel de silice et que le mélange présente une granulométrie, avec refus de tamisage sur un tamis de 0,2 mm, inférieure ou égale à 30%.

2. Liant hydraulique avec le ciment comme composant principal, auquel est ajouté un mélange de vitriol vert (sulfate ferreux) humide et d'un matériau support inerte, **caractérisé en ce que** le matériau support est de l'oxyde d'aluminium activé et que le mélange présente une granulométrie, avec refus de tamisage sur un tamis de 0,2 mm, inférieure ou égale à 30%.

3. Liant hydraulique selon la revendication 1 ou 2, **caractérisé en ce que** le refus de tamisage est inférieur ou égal à 20%.

4. Liant hydraulique selon l'une quelconque des revendications 1 à 3, **caractérisé en ce que** le mélange contient au moins l'un des adjuvants zinc (Zn), aluminium (Al), phosphore (P) ou oxyde de titane (TiO₂).
